# EUROPEAN PATENT APPLICATION

(11) **EP 0 627 185 A1**
(43) Date of publication of application: **07.12.1994**
(21) Application number: 93670003.8
(22) Date of filing: 02.06.1993
(51) Int. Cl.: A47J 27/13, A47J 33/00

(54) **Collapsable outdoor cooking device or incinerator**

(71) Applicant: Neaves, Robert John, Albufeira (PT)
(72) Inventor: Neaves, Robert John, Albufeira (PT)
(74) Representative: Sousa da Silva Lourenço, Ludgero

(57) **Abstract**

There is described an outdoor cooking device or incinerator for confining a fuel to be burnt that when assembled comprises a base and one or more side walls extending upwardly from said base, said base and side walls comprising a plurality of sections (1, 2, 3) which can be separated or moved relative to each other for storage in a nested configuration.

## Description

The present invention relates to outdoor cooking devices and incinerators.

Ever since the discovery of fire man has tried many ways of harnessing its power through the utilisation of more or less elaborate apparatus and systems. Nowhere is this more evident than in the field of cookery and in particular in the design of barbecues and other outdoor cooking devices. Their dimensions, non-complexity, portability, efficiency and economy have all been present in the minds of those that have directed their attention to the finding of novel and better solutions to the problems associated with such devices in the past.

Typical of these problems are those of protecting the burning fuel against winds, avoiding burning or charring the food to be grilled, and enabling the utilisation of an economical fuel. Additional to these problems is the fact that barbecues and other outdoor cooking devices are typically of a bulky construction and so may take up valuable storage space when not in use.

According to a first aspect of the present invention there is provided an outdoor cooking device or incinerator for confining a fuel to be burnt that when assembled comprises a base and one or more side walls extending upwardly from said base characterised in that said base and side walls comprise a plurality of sections which can be separated or moved relative to each other for storage in a nested configuration.

Advantageously said plurality of sections may include a base portion comprising a base and one or more side walls extending upwardly from said base and at least one open-ended member, the base portion being so sized to be capable of receipt within said open-ended member. Preferably the outdoor cooking device or incinerator may include two open-ended members, one of said open-ended members being so sized as to be capable of receiving said base portion and to be itself received within the other of said open-ended members.

Advantageously each of said plurality of sections may comprise the same number of side walls as each of the other of said plurality of sections.

Advantageously said plurality of sections are assembled one on top of the other.

Advantageously said plurality of sections may each be provided with one of a respective pair of interengaging formations. Preferably said interengaging formations may comprise an edge of one of said sections which is adapted for receipt within a rim of another of said sections.

Advantageously said plurality of sections may be assembled in such a way that in cross-section the corresponding side walls of each of said sections extended rectilinearly of each other.

Advantageously each of said plurality of sections may be of substantialy inverted frustro-conical shape.

Advantageously said plurality of sections may be arranged telescopically of each other.

Advantageously at least one of said plurality of sections may be provided with one or more apertures for the admission of air.

Advantageously the section which, when assembled, comprises the uppermost of said plurality of sections may be provided adjacent an upper rim thereof with one or more apertures for the admission of air, said apertures being of sufficient size to cause the air admitted therethrough to direct downwardly any flames that might otherwise extend above said rim.

An embodiment of the present invention will now be described by way of example with reference to the accompanying drawings in which:
Figure 1 is a side view of an outdoor cooking device assembled from three sections in which part of each section has been broken away for the sake of clarity;

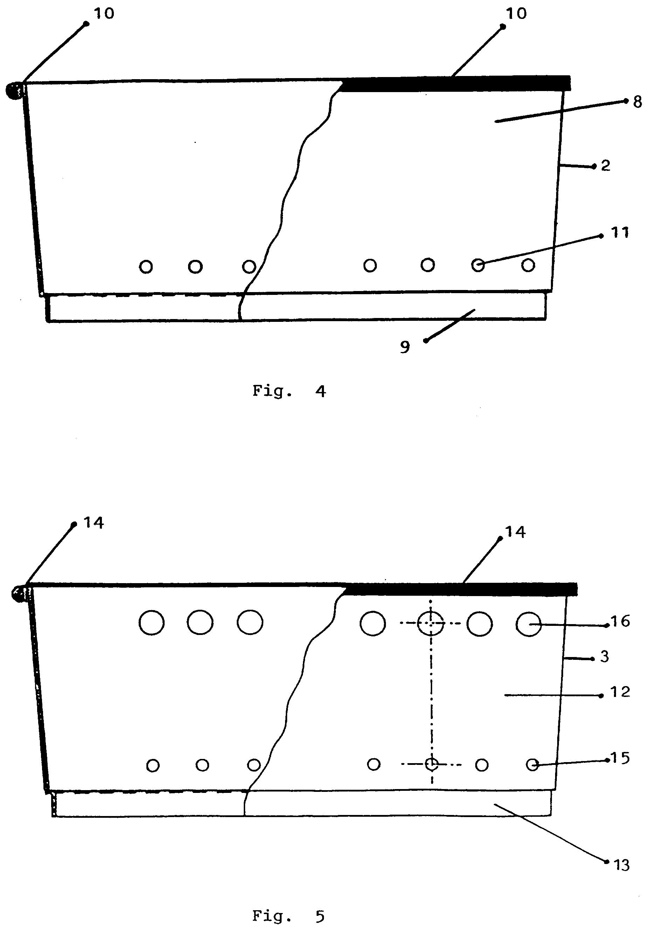

Figure 2 is a side view of the base portion of the outdoor cooking device of Figure 1 in which part of the base portion has been broken away for the sake of clarity;
Figure 3 is a detailed cross-sectional view of one of the ground engaging feet of the base portion of Figure 2;
Figure 4 is a side view of a first ring portion of the outdoor cooking device of Figure 1 in which part of the ring portion has been broken away for the sake of clarity; and
Figure 5 is a side view of a second ring portion of the outdoor cooking device of Figure 1 in which part of the ring portion has been broken away for the sake of clarity.

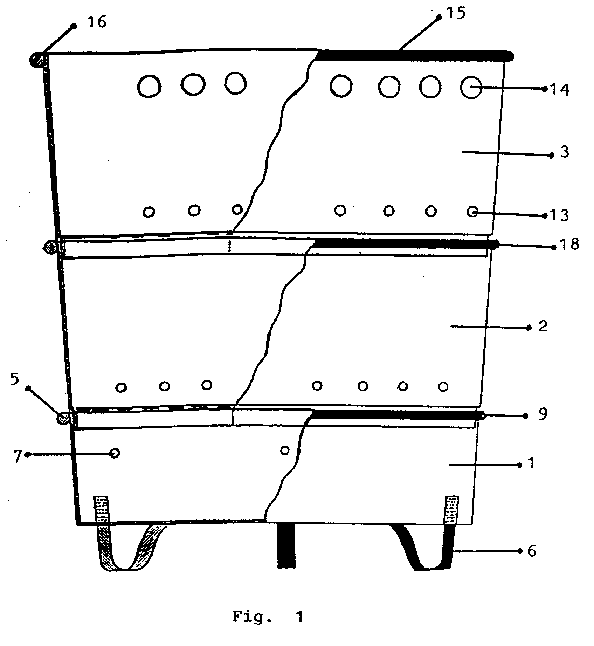

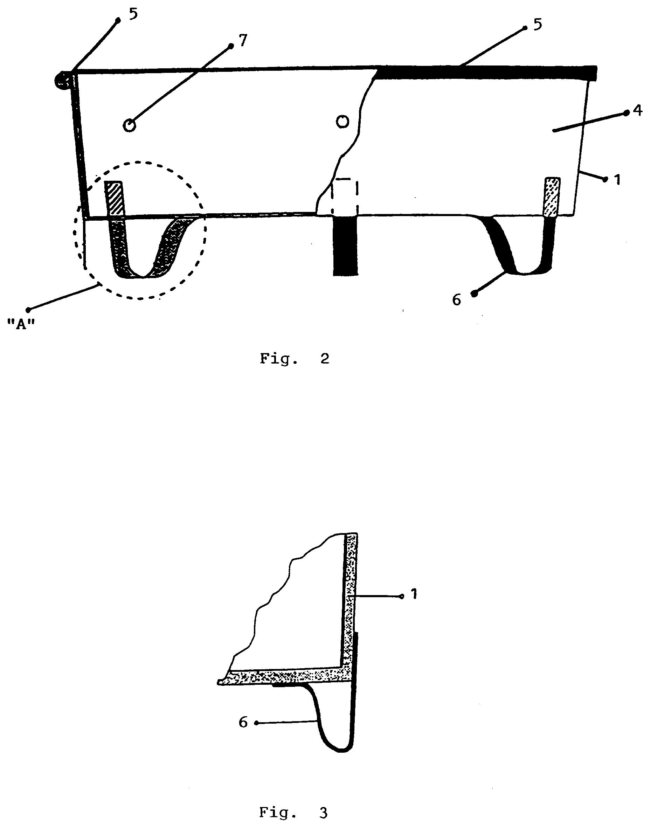

Referring to Figure 1 there is shown an outdoor cooking device comprising a base portion 1 and first and second ring portions 2 and 3.

The base portion 1 is shaped so as to from an open topped container having a generally inverted frustro-conical shape in which the side wall 4 projects upwardly and outwardly from the base of the container to terminate in a circumferential rim portion 5 of generally circular cross-section. In addition to this the base portion 1 is provided on an under surface of the base of the container with three ground-engaging feet 6 as well as a series of apertures 7 located at intervals around the side wall 4, the apertures 7 being so sized and distributed as to allow the admission of a suitable quantity of air into the container.

Unlike the base portion 1, the first ring portion 2 simply comprises an open-ended member having a side wall 8 of generally inverted frustro-conical shape. However, adjacent to the end having the smaller of the two diameters, the side wall 8 is provided with an annular groove 9 which is so sized as to be capable of receipt within the circumferential rim portion 5 of the base portion 1. Thus, with the annular groove 9 received within the circumferential rim portion 5, the first ring portion 2 may be supported by the base portion 1 with the rim portion 5 bearing against the annular shoulder defined at the interface between the annular groove 9 and the side wall 8. The frustro-conical shape of the first ring portion 2 is preferably such that in this position the respective side walls 4 and 8 of the base portion 1 and the first ring portion 2 extend in cross-section substantially rectilinearly of each other.

At the end of the first ring portion 2 remote from the annular groove 9, the side wall 8 terminates in a second circumferential rim portion 10 which, like that of the base portion 1, is again of generally circular cross-section.

In addition to this the first ring portion 2 is provided at intervals around the side wall 8 with one or more apertures 11, the apertures 11 being so sized and distributed as to stimulate air circulation within the assembled outdoor cooking device.

Like the first ring portion 2, the second ring portion 3 comprises an open-ended member having a side wall 12 of generally inverted frustro-conical shape. As with the first ring portion 2, the side wall 12 is provided at an end of the second ring portion 3 adjacent the smaller of the two diameters with an annular groove 13. This annular groove 13 is so sized as to be capable of receipt within the circumferential rim portion 10 of the first ring portion 2 such that in this position the second ring portion 3 may be supported by the first ring portion 2 with the rim portion 10 bearing against the annular shoulder defined at the interface between the annular groove 13 and the side wall 12. As before, the frustro-conical shape of the second ring portion 3 is such that in this position the side wall 12 extends in cross-section substantially rectilinearly of the side walls 4 and 8 of both the base portion 1 and the first ring portion 2.

At the end of the second ring portion 3 remote from the annular groove 13, the side wall 12 terminates in a third circumferential rim portion 14 which is adapted to support a griddle on which the food to be cooked in then placed. In addition to this the second ring portion 3 is provided at intervals around the side wall 12 with one or more apertures 15, 16, the apertures 15, 16 being so sized and distributed as to stimulate air circulation within the assembled outdoor cooking device.

In this regard it is considered preferable for the second ring portion 3 to be provided adjacent the annular groove 13 with a first series of apertures 15 having a first diameter and a second series of apertures 16 of larger diameter adjacent the circumferential rim portion 14. It has been found that the provision of this second series of apertures 16 has the effect of directing downwardly any flames that might otherwise directly play upon the food to be cooked. In this way it has been found possible to prevent the burning or charring of the food to be cooked without any appreciable loss in the heat generated by the burning fuel.

The outdoor cooking device described has been designed so as to be capable of using waste paper as the fuel to be burned in order to generate the heat required to grill the food to be cooked. In this regard it is considered that old newspapers and packing paper comprise the preferred fuel to be burnt particularly since the burning of such non-bleached paper does not contribute to the destruction of the ozone layer. For the same reason the paper used in illustrated magazines is currently not preferred.

Whilst the outdoor cooking device has been described as being designed for use with burning paper it will be apparent to those skilled in the art that any other suitable fuel may also be used.

The outdoor cooking device has also been designed so as to minimise the risk of injury to a user of the device since the side walls 4, 8, and 12 are capable of cooling sufficiently quickly as to fall to ambient temperature within 10 minutes of the fire within the device having been extinguished.

In addition to the foregoing advantages, the various sections of the outdoor cooking device are so sized as to be capable of receipt one within the other. Thus the second ring portion 3 is so sized as to be able to receive the first ring portion 2 and the first ring portion 2 is itself so sized as to be able to receive the base portion 1. Clearly when in this nested configuration the various parts of the cooking device may be stored both before and after use and take up the minimum of valuable storage space.

Furthermore, because of the reduced volume taken up by the cooking device prior to assembly, the device may be easily transported from a place of storage to its place of use. Indeed to this end the cooking device may be provided with a dedicated carrier formed of plastics or some other suitable material to facilitate the transportation of the device from place to place.

In order to further facilitate the transportation of the outdoor cooking device the various sections of the device may be made of a light weight material capable of withstanding the temperatures that are likely to be achieved during use. In one preferred embodiment the base portion 1 and the first and second ring portions 2 and 3 are each made of Inox steel.

It will be apprent to those skilled in the art that, depending on the material used, the various sections of the device may need to be provided with one or more strengthening struts or ribs.

In use the outdoor cooking device is transported to its position of use by means of its carrier. The cooking device is then separated from the carrier and the base portion 1 and the first and second ring portions 2 and 3 displaced from their nested storage configuration. The base portion 1 is arranged on the ground so that the feet 6 are at an even height and the section is substantially stable.

Thereafter the first ring portion 2 is positioned on top of the base portion 1 in such a way that the annular groove 9 is received within the circumferential rim portion 5 and the second ring portion 3 is then positioned on top of the first ring portion 2 in such a way that the annular groove 13 is received within the circumferential rim portion 10.

Having assembled the outdoor cooking device, a number of balls of waste paper are constructed and placed within the device so as to almost fill it. The balls of waste paper are then ignited and the resulting fire allowed to establish itself. After a few minutes the cooking device is ready for use and a griddle bearing the food to be cooked is placed on top of the circumferential rim portion 14 of the second ring portion 3. How long any particular item of food is held above the burning paper is of course a matter of personal preference however should the paper need to be replenished this is clearly possible by temporarily removing the griddle and filling the cooking device from the tap with more balls of waste paper.

Whilst the outdoor cooking device has been described as comprising three sections each of which may be separated from the others, it will be apparent to those skilled in the art that this need not necessarily be the case. Indeed the outdoor cooking device may be made up of any number of sections while in another embodiment the various sections may be arranged telescopically with respect to each other and so may not be separated.

It will also be apparent to those skilled in the art that whilst the present invention has been described in relation to outdoor cooking devices it is equally applicable to braziers and other similar types of incinerator.

## Claims

1. An outdoor cooking device or incinerator for confining a fuel to be burnt that when assembled comprises a base and one or more side walls extending upwardly from said base, characterised in that said base and side walls comprise a plurality of sections which can be separated or moved relative to each other for storage in a nested cofiguration.

2. An outdoor cooking device or incinerator in accordance with claim 1, wherein said plurality of sections include a base portion comprising a base and one or more side walls extending upwardly from said base and at least one open-ended member, the base portion being so sized as to be capable of receipt within said open-ended member.

3. An outdoor cooking device or incinerator in accordance with claim 2 and including two open-ended members, one of said open-ended members being so sized as to be capable of receiving said portion and to be itself received within the other of said open-ended members.

4. An outdoor cooking device or incinerator in accordance with claim 2 or claim 3, wherein each of said plurality of sections comprises the same number of side walls as each of the other of said plurality of sections.

5. An outdoor cooking device or incinerator in accordance with any preceding claim, wherein said plurality of sections are assembled one on top of the other.

6. An outdoor cooking device or incinerator in accordance with any preceding claim wherein said plurality of sections are each provided with one of a respective pair of interengaging formations.

7. An outdoor cooking device or incinerator in accordance with claim 6, wherein said interengaging formations comprise an edge of one of said sections which is adapted for receipt within a rim of another of said sections.

8. An outdoor cooking device or incinerator in accordance with any preceding claim, wherein said plurality of sections are assembled in such a way that in cross-section the corresponding side walls of each of said sections extend rectilinearly of each other.

9. An outdoor cooking device or incinerator in accordance with any preceding claim, wherein each of said plurality of sections is of substantially inverted frustro-conical shape.

10. An outdoor cooking device or incinerator in accordance with any preceding claim, wherein said plurality of sections are arranged telescopically of each other.

11. An outdoor cooking device or incinerator in accordance with any preceding claim, wherein at least one of said plurality of sections is provided with one or more apertures for the admission of air.

12. An outdoor cooking device or incinerator in accordance with any preceding claim, wherein the section which, when assembled, comprises the uppermost of said plurality of sections is provided adjacent an upper rim thereof with one or more apertures for the admission of air, said apertures being of sufficient size to cause the air admitted therethrough to direct downwardly any flames that might otherwise extend above said rim.
